Europäisches Patentamt

European Patent Office

Office européen des brevets

(11) Veröffentlichungsnummer: **0 215 364 B1**

(19)

(12) # EUROPÄISCHE PATENTSCHRIFT

(45) Veröffentlichungstag der Patentschrift: **04.08.93**

(51) Int. Cl.5: **C08K 3/00**, C08K 5/09, C08L 67/02, //(C08L67/02,67:02)

(21) Anmeldenummer: **86112031.9**

(22) Anmeldetag: **30.08.86**

Die Akte enthält technische Angaben, die nach dem Eingang der Anmeldung eingereicht wurden und die nicht in dieser Patentschrift enthalten sind.

(54) **Verfahren zur Herstellung schnellkristallisierender Polyestermassen.**

(30) Priorität: **09.09.85 DE 3532034**

(43) Veröffentlichungstag der Anmeldung:
**25.03.87 Patentblatt 87/13**

(45) Bekanntmachung des Hinweises auf die Patenterteilung:
**04.08.93 Patentblatt 93/31**

(84) Benannte Vertragsstaaten:
**AT BE CH DE FR GB IT LI LU NL SE**

(56) Entgegenhaltungen:
EP-A- 0 015 145
EP-A- 0 186 456
DD-A- 226 896
FR-A- 2 243 978

**MAKROMOLEKULARE CHEMIE, Band 186, Nr. 3, März 1985, Seiten 641-647, Basel, CH; S.P. MISHRA et al.: "Crystallization behaviour of poly(ethylene terephthalate) and poly(tetramethylene terephthalate) blends"**

(73) Patentinhaber: **HOECHST AKTIENGESELL-SCHAFT**

**W-6230 Frankfurt am Main 80(DE)**

(72) Erfinder: **Espenschied, Bernd, Dr.
Rieslingstrasse 15
W-6500 Mainz-Hechtsheim(DE)**
Erfinder: **Klein, Peter, Dr.
Fasanenweg 13
W-6200 Wiesbaden(DE)**

EP 0 215 364 B1

**Beschreibung**

Polyethylenterephthalat (PET) wird zur Herstellung von Formkörpern, Folien und Fasern verwendet. Ein in diesem Zusammenhang bekanntes Problem liegt darin, daß PET nur eine geringe Kristallisationsneigung zeigt. Eine deutliche Steigerung der Kristallisationsgeschwindigkeit kann durch inkorporierte Nukleierungsmittel bewirkt werden. Im großen und ganzen gilt dabei, daß die bekannten guten Nukleierungsmittel den Polyester bei der Verarbeitung abbauen, während Zusätze ohne diese ungewünschte Begleiterscheinung das Kristallisationsverhalten in der Regel nur wenig verbessern. Zu den wenig wirksamen Nukleierungsmitteln gehören inerte anorganische Mineralien, inerte Metalloxide oder andere inerte Metallsalze, wie z.B. Kalk, Porzellanerde, Talkum, Glimmer, Kaolin, Silikate, Alumosilikate, Titandioxid, Zirkondioxid, Aluminiumoxid, Eisenoxide, Chromoxide, Zinksulfid, Bariumtitanat, Bariumsulfat, Calciumsulfat, Zinktitanat, Strontiumsulfat, Calciumcarbonat und dergleichen. Sie werden entweder im Verlauf der Polykondensation oder meist im Anschluß daran in die Polyesterschmelze eingearbeitet.

Zu den besonders guten Nukleierungsmitteln gehören demgegenüber die Alkalisalze organischer Säuren, wie die aliphatischer, aromatischer oder auch heterocyclischer Carbonsäuren.

Auch Alkalisalzen mit andersgearteten Säureresten, wie z.B. Alkali-Paraffinsulfonaten, Alkali-Olefinsulfonaten und Alkali-Arylsulfonaten, Alkali-Sulfinaten, Alkali-Phosphonaten, Alkali-Phosphinaten oder auch Alkali-Phenolaten wird eine gute Nukleierungswirkung zugeschrieben.

Alle diese Nukleierungsmittel werden bevorzugt nach Beendigung der Polykondensation in die Polyesterschmelze eingearbeitet. Aufgrund ihrer chemischen Struktur ist mit ihrem Einsatz jedoch stets ein mehr oder weniger starker Abbau des Polyesters verbunden.

Schnellkristallisierende Polyethylenterephthalatmassen sind aus der DD-B-226 896 bekannt. Zu deren Herstellung wird ein Polyethylenterephthalat mit einer mittleren Molmasse von ≥ 20000 mit anorganischen Verbindungen, die als Umesterungskatalysatoren und als Nukleierungsmittel wirken, umgeestert und anschließend polykondensiert. Eine sich anschließende Reaktion mit Polyesteralkoholen mit freien Hydroxylgruppen von einer mittleren Molmasse von > 2000 bis zu 5000 führt zu einem Polyester, dessen Molekulargewicht gegenüber dem Ausgangspolyester erheblich reduziert ist, was zu einer negativen Beeinflußung der mechanischen Eigenschaften von daraus hergestellten Formteilen führen kann.

In der DE-Offenbarungsschrift 1 804 914, der AT-Patentschrift 279.175 und der EP-Offenlegungsschrift 31 201 ist weiterhin die Herstellung verarbeitungsstabiler, schnellkristallisierender Polyestermassen beschrieben, wobei Alkalimetalle, -legierungen oder deren Salze, wie zum Beispiel Alkalisulfonate oder Alkalicarboxylate, gegebenenfalls zusammen mit weiteren herkömmlichen Katalysatoren zu einem beliebigen Zeitpunkt im Verlauf der Umesterung, Veresterung oder Polykondensation, bevorzugt aber zu Beginn der Umesterung bzw. Veresterung, eingesetzt werden. Sie katalysieren zum einen die Synthese des Polyethylenterephthalats und dienen andererseits, wenn in ausreichender Menge zugegeben, als Nukleierungsmittel. Im zu verarbeitenden Polyester liegen diese Nukleierungsmittel entweder in der eingesetzten Form oder mit dem Polyester im chemischen Gleichgewicht stehend vor. Wie bereits in Faserforschung Textiltechnik 13, Seite 481 (1962) beschrieben, sind aber derart hergestellte verarbeitungsstabile, schnellkristallisierende Polyestermassen mehr oder weniger stark gelblich verfärbt.

Der vorliegenden Erfindung lag daher die Aufgabe zugrunde, verarbeitungsstabile, schnellkristallisierende Polyestermassen mit gleichzeitig verbesserter Farbqualität herzustellen.

Die Lösung dieser Aufgabe erfolgt erfindungsgemäß in überraschend einfacher Weise dadurch, daß in einer ersten Stufe zunächst die Herstellung eines hochnukleierten Polyesters in Gegenwart von bestimmten Mengen an (Erd-)Alkalimetall oder einer (Erd-)Alkalimetall-Verbindung erfolgt und daß dann in einer zweiten Stufe diesem hochnukleierten Polyester ein unnukleierter Polyester zugemischt wird.

Die Erfindung betrifft daher ein Verfahren zur Herstellung von schnellkristallisierenden Polyestern nach dem Veresterungs-/Polykondensationsverfahren und/oder dem Umesterungs-/Polykondensationsverfahren, wobei zumindest ein Teil des Polyesters durch Polykondensation in Gegenwart von (Erd-)Alkalimetall oder einer (Erd-)-Alkalimetallverbindung hergestellt wird, dadurch gekennzeichnet, daß

a) in einer ersten Stufe ein hochnukleierter Polyester mit einer reduzierten spezifischen Viskosität von mindestens 0,3 dl/g hergestellt wird unter Zugabe von $1 \times 10^{-1}$ mol bis 1 mol pro kg dieses Polyesters an (Erd-)Alkalimetall oder einer (Erd-)Alkalimetall-Verbindung zu einem beliebigen Zeitpunkt der Synthese und daß anschließend

b) in einer zweiten Stufe durch Zumischen dieses hochnukleierten Polyesters zu einem nichtnukleierten Polyester gleicher oder anderer chemischer Zusammensetzung mit einer reduzierten spezifischen Viskosität von mindestens 0,3 dl/g der schnellkristallisierende Polyester erhalten wird, wobei das Mischungsverhältnis des Polyesters nach a) zu dem Polyester nach b) Werte zwischen 1 : 1 und 1 : 100 aufweist.

Neben der hohen Verarbeitungsstabilität weisen derart zweistufig hergestellte schnellkristallisierende Polyester deutlich bessere Farbzahlen auf als solche, die einstufig in Gegenwart äquimolarer Mengen von (Erd-)Alkalimetall oder (Erd-)Alkalimetall-Verbindung hergestellt werden oder die durch Zusatz äquivalenter Mengen von (Erd-)Alkalimetall-Verbindung zum fertigen Polyester in üblicher Weise nukleiert werden. Von den letztgenannten Polyestern hebt sich zusätzlich besonders deutlich die bessere Verarbeitungsstabilität der erfindungsgemäß hergestellten schnellkristallisierenden Polyestermassen ab. Es ist als überraschend anzusehen, daß durch den einfachen erfindungsgemäßen Weg derartige Vorteile zu erzielen sind.

Als hochnukleierte oder nichtnukleierte Polyester eignen sich erfindungsgemäß grundsätzlich alle bekannten, kristallisierfähigen, linearen oder schwach verzweigten Polyester, wie sie beispielsweise in R.E. Wilfong, J. Polymer Sci. 54 S. 385-410 (1961) oder in Ullmanns Enzyklopädie der technischen Chemie (4. Aufl.) 19, S. 61-68 (1980), beschrieben sind. Bevorzugt ist Polybutylenterephthalat und besonders bevorzugt Polyethylenterephthalat.

Ein anderer Polyester, der erfindungsgemäß auch eingesetzt werden kann, ist z.B Polycyclohexan-1,4-dimethylolterephthalat.

Geeignet sind ferner Polyester, die als Säurekomponenten neben Terephthalsäure bis zu 20 Molprozent, vorzugsweise bis zu 10 Molprozent andere aromatische, araliphatische, oder aliphatische Dicarbonsäuren und/oder bis zu 2 Molprozent, vorzugsweise bis zu 1 Molprozent tri- oder mehrfunktionelle Carbonsäuren enthalten und die als Diolkomponente neben Butylenglykol oder vorzugsweise Ethylenglykol bis zu 20 Molprozent, vorzugsweise bis zu 10 Molprozent aromatische, araliphatische, andere aliphatische Diole und/oder bis zu 2 Molprozent, vorzugsweise bis zu 1 Molprozent tri- oder mehrfunktionelle Alkohole enthalten.

Zu den angesprochenen Dicarbonsäuren und den tri- oder mehrfunktionellen Carbonsäuren gehören z.B. Isophthalsäuren, Phthalsäure, alkylsubstituierte Phthalsäuren, alkylsubstituierte Isophthalsäuren oder alkylsubstituierte Terephthalsäuren, Naphthalindicarbonsäuren, wie z.B. 2,6-Naphthalindicarbonsäure, 2,7-Naphthalindicarbonsäure, aliphatische Dicarbonsäuren, wie z.B. Bernsteinsäure, Adipinsäure, Sebacinsäure, Azelainsäure oder Decandicarbonsäure, Dimersäure, Trimersäure, alicyclische Dicarbonsäuren, wie z.B. Cyclohexandicarbonsäure, Trimesinsäure, Trimellithsäure oder Pyromellithsäure.

Die di- und mehrfunktionellen Carbonsäuren können zur Polyestersynthese in bekannter Weise entweder in ihrer freien Form oder als esterbildende Derivate, wie z.B. als Di- oder Polymethylester, verwendet werden. Zur Synthese des hochnukleierten Polyesters gemäß der Stufe a) werden sie bevorzugt als esterbildende Derivate, besonders bevorzugt als Di- oder Polymethylester eingesetzt. Dadurch kann zusätzlich die katalytische Aktivität der erfindungsgemäß eingesetzten Alkalimetalle oder der Alkalimetallverbindung im Verlaufe der Umesterungsstufe genutzt werden.

Zu den angesprochenen Diolkomponenten oder den tri- bzw. mehrfunktionellen Alkoholen gehören zum Beispiel Trimethylenglykol, 1,2-Propandiol, Hexamethylenglykol, Neopentylglykol, Di- oder Triethylenglykol, 1,4-Cyclo-hexandimethanol, Di- oder Polyhydroxybenzole, wie z.B. Hydrochinon oder Resorcin, Bisphenole, wie z.B. Bisphenol A, Bisphenol F, und aromatische Diole, wie z.B. Etherdiole aus Bisphenolen und Glykolen, Glycerin, Trimethylolpropan oder Pentaerythrit. Als Diolkomponenten können ferner lineare Oligo- bzw. Polyester oder Oligo- bzw. Polyether mit zwei endständigen Hydroxylgruppen und Molekulargewichten bis zu 10.000 g/mol, vorzugsweise bis zu 5000 g/mol, besonders bevorzugt bis 2000 g/mol gewählt werden. Hierzu gehören z.B. Polytetrahydrofurane mit Molekulargewichten von 650 bis 2000 g/mol.

Alle di- und mehrfunktionellen Alkoholkomponenten können zur Polyestersynthese entweder als esterbildende Derivate oder vorzugsweise in ihrer freien Form eingesetzt werden.

Statt oder zusätzlich zu den angesprochenen Cokomponenten können die erfindungsgemäß hergestellten Polyester auch bis zu 20 Molprozent, vorzugsweise bis zu 10 Molprozent Hydroxycarbonsäuren, wie z.B. $\epsilon$-Hydroxycapronsäure, Hydroxybenzoesäure oder Hydroxyethoxybenzoesäure, enthalten, die zur Polyestersynthese entweder in ihrer freien Form oder als esterbildende Derivate eingesetzt werden.

Die erfindungsgemäß hergestellten hochnukleierten Polyester bzw. die in der zweiten Stufe eingesetzten nichtnukleierten Polyester haben reduzierte spezifische Viskositäten, gemessen als 1 %ige Lösungen in Dichloressigsäure bei 25 °C, von mindestens 0,3 dl/g, vorzugsweise von mindestens 0,5 dl/g und besonders bevorzugt von mindestens 0,6 dl/g. Für den Fall, daß Butylenglykol als Hauptkomponente vorliegt, betragen die spezifischen Viskositäten mindestens 0,6 dl/g, vorzugsweise mindestens 0,8 dl/g und besonders bevorzugt mindestens 0,9 dl/g.

Neben den angesprochenen Homopolyestern und den Copolyestern auf Basis von Polybutylenterephthalat oder Polyethylenterephthalat können als nichtnukleierte Polyester auch Mischungen der angesprochenen Homo- und Copolyester, wie z.B. Mischungen aus Polybutylenterephthalat und Polyethylenterephthalat, oder auch Mischungen eines oder mehrerer der angesprochenen Homo- oder Copolyester mit mindestens einem weiteren Polyester, wie z.B. Mischungen aus Polyethylenterephthalat und einem Polyester auf Basis Bisphenol A/Isophthalsäure/Terephthalsäure, zum Einsatz kommen. Ebenso können als nichtnukleierte Polyester auch Mischungen aus einem oder mehreren der angesprochenen Homo- oder Copolyester mit mindestens einem weiteren thermoplastisch verarbeitbaren Polymeren, wie z.B. Polyethylen, Polypropylen, Polycarbonat, Polyacetal, Polyamid, ABS-Polymere etc. verwendet werden. Der Gewichtsanteil dieser Homo- und Copolyester in den Mischungen beträgt dabei im allgemeinen mindestens 50 %, vorzugsweise mindestens 65 %, besonders bevorzugt mindestens 70 %.

Die Herstellung der hochnukleierten Polyester gemäß der Stufe a) erfolgt in Anwesenheit von (Erd-)Alkalimetall oder (Erd-)Alkalimetall-Verbindung. Der Begriff "(Erd-) Alkalimetall" soll dabei sowohl die Erdalkali- als auch die Alkalimetalle umfassen, wobei letztere bevorzugt sind. Als Erdalkalimetalle kommen vorzugsweise Magnesium und Calcium und als Alkalimetalle Lithium, Natrium und Kalium in Frage. Natrium ist dabei besonders bevorzugt. Auch Legierungen dieser Metalle untereinander sowie mit anderen Metallen, wie in der DE-Offenlegungsschrift 1 804 914 beschrieben, können erfindungsgemäß eingesetzt werden.

Als Verbindungen der (Erd-)Alkalimetalle sind generell alle Verbindungen dieser Metalle mit H-aciden anorganischen oder organischen Verbindungen geeignet, sofern sie die Umesterung oder Polykondensation nicht nachteilig beeinflussen.

Als anorganische Verbindungen der (Erd-)Alkalimetalle, vorzugsweise des Natriums, kommen beispielsweise die entsprechenden Silikate, Phosphate, Phosphite, Sulfate oder bevorzugt Carbonate, Hydrogencarbonate und Hydroxide in Frage.

Zu den organischen Verbindungen der (Erd-)Alkalimetalle, vorzugsweise des Natriums, gehören die entsprechenden Salze von (cyclo)aliphatischen, araliphatischen oder aromatischen Carbonsäuren mit vorzugsweise bis zu 30 C-Atomen und vorzugsweise 1 bis 4 Carboxylgruppen. Beispiele hierfür sind: Alkalimetallsalze der Ameisensäure, Essigsäure, Propionsäure, Buttersäure, Isobuttersäure, Caprylsäure, Stearinsäure, Cyclohexancarbonsäure, Bernsteinsäure, Adipinsäure, Korksäure, 1,10-Decandicarbonsäure, 1,4-Cyclohexandicarbonsäure, Terephthalsäure, 1,2,3-Propantricarbonsäure, 1,3,5,-Cyclohexantricarbonsäure, Trimellithsäure,1,2,3,4-Cyclopentantetracarbonsäure, Pyromellithsäure, Benzoesäure, substituierten Benzoesäuren, Dimersäure und Trimersäure sowie neutrale oder teilneutralisierte Montanwachssalze oder Montanwachsestersalze (Montanate). Auch Salze mit andersgearteten Säureresten, wie z.B. Alkali-Paraffin-, Alkali-Olefin- und Alkali-Arylsulfonate oder auch Phenolate sowie Alkoholate, wie z.B. Methanolate, Ethanolate, Glykolate, können erfindungsgemäß eingesetzt werden. Bevorzugt werden Natriumcarbonat, Natriumhydrogencarbonat, Natriumhydroxid, Natriumsalze von Mono- und Polycarbonsäuren, insbesondere die aliphatischer Mono- und Polycarbonsäuren, vorzugsweise solchen mit 2 bis 18 C-Atomen, insbesondere mit 2 bis 6 C-Atomen und bis zu vier, vorzugsweise bis zu zwei Carboxylgruppen, sowie Natriumalkolate mit vorzugsweise 2 bis 15, insbesondere 2 bis 8 C-Atomen verwendet. Beispiele besonders bevorzugter Vertreter sind Natriumacetat, Natriumpropionat, Natriumbutyrat, Natriumoxalat, Natriummalonat, Natriumsuccinat, Natriummethanolat, Natriumäthanolat, Natriumglykolat. Es können auch Gemische verschiedener (Erd-) Alkalimetall-Verbindungen eingesetzt werden.

Das (Erd-)Alkalimetall oder die (Erd-)Alkalimetallverbindung werden zu einem beliebigen Zeitpunkt der Synthese des hochnukleierten Polyesters zugegeben, die nach dem Veresterungs-/Polykondensationsverfahren, vorzugsweise jedoch nach dem Umesterungs-/Polykondensationsverfahren erfolgt. Besonders bevorzugt ist die Zugabe zu Beginn der Umesterung bei Anwendung des Umesterungs-/Polykondensationsverfahrens, da dann zusätzlich die reaktionsbeschleunigende Wirkung des (Erd-)Alkalimetalls oder der (Erd-)Alkalimetallverbindung auf den Verlauf der Umesterung, gegebenenfalls unter Verzicht auf weitere Umesterungskatalysatoren, genutzt werden kann. Das Veresterungs-/Polykondensationsverfahren bzw. das Umesterungs-/Polykondensationsverfahren, nach denen die Herstellung des erfindungsgemäßen schnellkristallisierenden Polyesters erfolgt, sind wohlbekannt und beispielsweise beschrieben in Ullmann's Encyklopädie der technischen Chemie (4. Auf.) 19, S. 61-88 (1980).

Die Menge an (Erd-)Alkalimetall oder (Erd-)Alkalimetallverbindung liegt im allgemeinen zwischen $2 \times 10^{-2}$ mol und 1 mol pro kg des herzustellenden hochnukleierten Polyesters. Diese Mengen sind an und für sich nicht kritisch. Bei Überschreiten der Obergrenze tritt jedoch zunehmend eine Verlangsamung der Kondensationsreaktion ein, während unterhalb der Untergrenze die erfindungsgemäßen Vorteile immer weniger zum Tragen kommen. Vorzugsweise wird das (Erd-)Alkalimetall oder die (Erd-)Alkalimetallverbindung in einer Menge von $5 \times 10^{-2}$ mol bis $6 \times 10^{-1}$ mol, besonders bevorzugt $1 \times 10^{-1}$ mol bis $5.10^{-1}$ mol, jeweils pro kg des herzustellenden hochnukleierten Polyesters eingesetzt.

Zur Herstellung des schnellkristallisierenden Polyesters wird dieser hochnukleierte Polyester in der zweiten Stufe dem nichtnukleierten Polyester in einer solchen Menge zugemischt, daß die (Erd-)Alkalikonzentration in dem schnellkristallisierenden Polyester in der Regel zwischen $2 \times 10^{-3}$ bis 0,1 mol, vorzugsweise $5 \times 10^{-3}$ bis $6 \times 10^{-2}$ mol pro kg des gesamten Polyesters, liegt. Dies wird im allgemeinen durch ein Mischungsverhältnis zwischen 1:1 und 1:100, vorzugsweise zwischen 1:5 und 1:30 erreicht. Das Zumischen kann dabei in allen gängigen Mischapparaten, wie z.B. in Compoundierknetern oder Compoundierextrudern, erfolgen.

Der nichtnukleierte Polyester kann nach beliebigen Verfahren hergestellt werden, vorzugsweise jedoch gleichfalls nach dem Umesterungs-/Polykondensationsverfahren.

Den schnellkristallisierenden Polyestermassen können zusätzlich noch die bekannten Verstärkungsmittel, wie z.B. Glasfasern, Kohlefasern, Metallcarbidfasern, Glaskugeln udgl. zugegeben werden, wie sie beispielsweise in der DE-Patentschrift 29 20 246 und der US-Patentschrift 4.483.955 beschrieben sind. Deren Menge liegt im allgemeinen zwischen 0 und 300 Teilen, vorzugsweise zwischen 0 und 150 Teilen pro 100 Teilen Polyester. Die Zugabe dieser Zusätze kann an jeder geeigneten Stelle im Verlauf der Herstellung der schnellkristallisierenden Polyestermassen erfolgen.

Weiter können die schnellkristallisierenden Polyestermassen bekannte Zusatzstoffe, wie z.B. Füllstoffe, Flammschutzmittel, Schlagzähmodifikatoren, Stabilisatoren, Formtrennmittel, Antistatika oder ähnliches, enthalten. Derartige Zusatzstoffe sind beispielsweise in der DE-Patentschrift 2.920.246 oder in R.Gächter, H. Müller, Kunststoffadditive, Carl Hanser Verlag 1983 (München, Wien) beschrieben.

Die erfindungsgemäß erhältlichen Formmassen erlauben die Herstellung wärmeformbeständiger Formkörper mit großer Dimensionsstabilität, wie beispielsweise Zahn- und Kegelräder, Zahnstangen, Kupplungsscheiben, Führungselemente Bauteile für elektronische Geräte udgl..

Die Vorteile hoher Verarbeitungsstabilität und gleichzeitig verbesserter Farbqualität des erfindungsgemäß hergestellten schnellkristallisierenden Polyesters gegenüber herkömmlich nukleiertem Polyester geht aus den folgenden Beispielen hervor.

Als Maß für die Verarbeitungsstabilität wird die Abnahme der reduzierten spezifischen Viskosität ($\eta_{red}$.) einprozentiger Lösungen des Polyesters in Dichloressigsäure, gemessen bei 25°C, durch die Einarbeitung des Nukleierungsmittels bzw. des hochnukleierten Polyesters in nichtnukleierten Polyester herangezogen. Zur Meßmethode siehe M. Hoffmann, H. Krömer, R. Kuhn, Polymeranalytik I, Georg Thieme Verlag, Stuttgart (1977).

Die Farbmessung wurde an vollständig kristallisiertem Granulat mit jeweils gleicher Granulatform und -größe mit dem Filterphotometer [R]Elrepho der Firma Carl Zeiss durchgeführt. Die angegebenen Normfarbwertanteile x und y sowie die Helligkeit Y beziehen sich auf das CIE-System mit dem äquienergetischen Spektrum als Mittelpunktsvalenz (DIN 5033).

Die Beurteilung des Kristallisationsverhaltens erfolgte auf zwei Arten:

1. Differentialkalorimetrisch mit Hilfe des Gerätes DSC-2C der Firma Perkin-Elmer. Zur Erzielung einer jeweils gleichen thermischen Vorgeschichte wurden alle Proben vor dem Messen jeweils 5 min bei 290°C aufgeschmolzen. Aus der Schmelze wurden sie anschließend mit 20°C/min abgekühlt. Als Kenngröße wurde aus den dabei aufgezeichneten Diagrammen das Maximum der Kristallisationpeaks $T_R$ bestimmt. Die Kristallisationsneigung des (nukleierten) Polyesters ist umso größer, je höher $T_R$ ist. Aufgrund der je nach Art und Menge des eingesetzten Nukleierungsmittels spezifischen Abhängigkeit des Peakmaximums der Kristallisation von der jeweiligen Lösungsviskosität der Polyestermatrix können sinnvoll nur solche Werte verglichen werden, die bei gleicher Lösungsviskosität auftreten.

Zusätzlich zu den Meßwerten $T_R$ bei den angegebenen spezifischen Lösungsviskositäten sind daher auch die auf gleiche reduzierte spezifische Lösungsviskositäten von $\eta_{red}$. = 0,725 dl/g umgerechneten Werte $T_R^*$ angegeben.

2. Polarisationsmikroskopisch mit dem Gerät [R]Ortholux-Pol der Firma Leitz. Zur Erzielung einer jeweils gleichen thermischen Vorgeschichte wurden alle Proben vor dem Messen jeweils 5 min bei 290°C aufgeschmolzen. Anschließend wurden sie direkt in den auf 220°C temperierten Heiztisch des Schmelzmikroskops zwischen zwei gekreuzte Polarisatoren überführt. Die Halbwertszeit der Kristallisation $\tau_{1/2}$ ergibt sich aus der Zunahme der Depolarisation in Abhängigkeit von der Zeit. Sie entspricht der Zeitspanne zwischen dem Beginn der Depolarisation und dem Wendepunkt der Depolarisationskurve.

Beispiele 1 - 3

15,0 kg Dimethylterephthalat wurden mit 11,0 kg Ethylenglykol in Gegenwart von 5,0 g Manganacetattetrahydrat und 50 mMol Natrium, eingesetzt als metallisches Natrium (Beispiel 1), wasserfreies Natriumacetat (Beispiel 2) oder wasserfreies Natriumcarbonat (Beispiel 3), pro Mol Dimethylterephthalat unter Rühren und Stickstoffüberleiten bei 180 - 225°C unter Methanolabspaltung umgeestert. Die Umesterung war nach 105 Minuten beendet. Danach wurden 1,6 g Phosphorsäure und 5,8 g Antimontrioxid hinzugegeben und die Temperatur innerhalb einer Stunde auf 275°C gesteigert unter gleichzeitigem Evakuieren der Apparatur bis zu einem Druck von weniger als $10^{-3}$ bar. Nach weiteren 2 h Reaktion bei weniger als $10^{-3}$ bar wurde jeweils ein hochnukleierter Polyester mit einer reduzierten spezifischen Lösungsviskosität von $\eta_{red}$. von 0,81 dl/g erhalten.

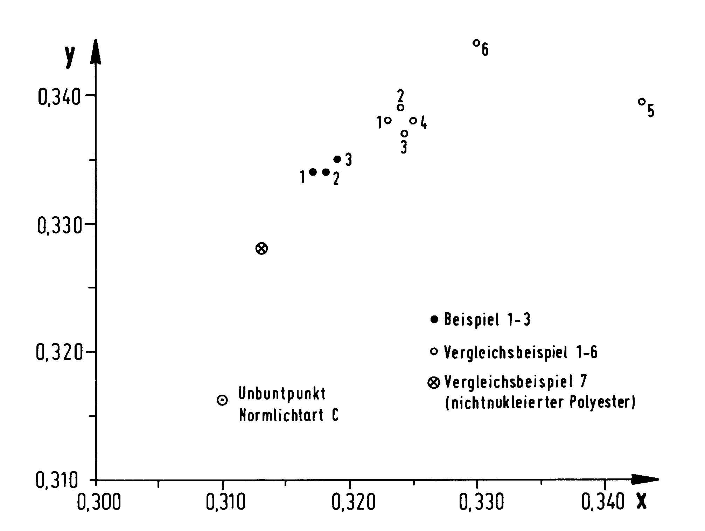

Anschließend wurden in einem geeigneten Compoundierextruder bei 280°C Massetemperatur 125 Teile dieses hochnukleierten Polyesters in 875 Teile nichtnukleiertes Polyethylenterephthalat ($\eta_{red.}$ = 0,82 dl/g)-eingearbeitet, das in gleicher Weise wie der hochnukleierte Polyester, jedoch ohne Zusatz von Natrium bzw. Natriumverbindung hergestellt worden war. Lösungsviskosität, Farbzahlen und Kristallisationsverhalten des so erhaltenen Granulates des erfindunggemäßen schnellkristallisierenden Polyesters sind in Tabelle 1 und in der Abbildung aufgeführt.

Vergleichsbeispiele 1 und 2:

15,0 kg Dimethylterephthalat wurden mit 11,0 kg Ethylenglykol in Gegenwart von 5,0 g Manganacetattetrahydrat und 6,2 mMol Natrium, eingesetzt als metallisches Natrium (Vergleichsbeispiel 1) bzw. wasserfreies Natriumacetat (Vergleichsbeispiel 2), pro Mol Dimethylterephthalat unter Rühren und Stickstoffüberleiten bei 180 - 225°C unter Methanolabspaltung umgeestert. Die Umesterung war nach 105 Minuten beendet. Danach wurden 1,6 g Phosphorsäure und 5,8 g Antimontrioxid hinzugegeben und die Temperatur innerhalb einer Stunde auf 275°C gesteigert unter gleichzeitigem Evakuieren der Apparatur auf einen Druck von weniger als $10^{-3}$ bar. Nach weiteren 2 h Reaktion bei weniger als $10^{-3}$ bar wurde ein nukleiertes Polyethylenterephthalat mit einer reduzierten spezifischen Viskosität $\eta_{red.}$ = 0,83 dl/g erhalten. Zur Bestimmung der Verarbeitungsstabilität wurde dieser Polyester unter den gleichen Bedingungen wie in den Beispielen 1 - 3 extrudiert. Lösungsviskosität, Farbzahlen und Kristallisationsverhalten des so erhaltenen Granulats sind wiederum in Tabelle 1 und der Abbildung aufgeführt.

Vergleichsbeispiele 3 - 6:

In einem geeigneten Kompoundierextruder wurden unter den gleichen Bedingungen wie in den Beispielen 1 - 3 bei 280°C Massetemperatur 0,26 Teile Natriumacetat (Vergleichsbeispiel 3), 0,17 Teile wasserfreies Natriumcarbonat (Vergleichsbeispiel 4), 1,0 Teile Natriumstearat (Vergleichsbeispiel 5) bzw. 1,6 Teile Natriummontanat (Vergleichsbeispiel 6) in je 100 Teile nichtnukleiertes Polyethylenterephthalat (identisch mit dem nichtnukleierten Polyethylenterephthalat aus den Beispielen 1 - 3, $\eta_{red.}$ = 0,82 dl/g) eingearbeitet. Lösungsviskosität, Farbzahlen und Kristallisationsverhalten des so erhaltenen Granulats zeigen die Tabelle 1 und die Abbildung.

Vergleichsbeispiel 7:

Das gleiche nichtnukleierte Polyethylenterephthalat, wie es in den Beispielen 1 - 3 und den Vergleichsbeispielen 3 - 6 eingesetzt wurde $\eta_{red.}$ = 0,82 dl/g) wurde ohne weitere Zusätze unter den Bedingungen der Beispiele 1 - 3 bzw. Vergleichsbeispiele 3 - 6 extrudiert. Bezüglich Lösungsviskosität, Farbzahlen und Kristallisationsverhalten des so erhaltenen Granulats siehe die Tabelle 1 und die Abbildung.

Beispiel 4 sowie Vergleichsbeispiele 8 und 9:

Unter Verwendung gleicher Mengen an entsprechender Natriumverbindung wurden analog zu Beispiel 2 und den Vergleichsbeispielen 6 und 7 ein schnellkristallisierender Polyester (Beispiel 4), ein herkömmlich mit Natriummontanat nukleierter Polyester (Vergleichsbeispiel 8) und ein nichtnukleiertes Polyethylenterephthalat (Vergleichsbeispiel 9) mit reduzierten spezifischen Lösungsviskositäten von 0,70-0,71 dl/g hergestellt. Die polarisationsmikroskopisch bestimmten Halbwertszeiten der Kristallisation bei 220°C sind in Tabelle 2 miteinander verglichen. Sie führen zum gleichen Ergebnis wie die $T_R$-Werte.

## Tabelle 1:

| Beispiel/ Vergleichsbeispiel | Nukleierungsmittel | $h_{red}$ (dl/g) | m Mol Na/ kg Polyester | $T_R$ (°C) | $T_R$ *) (°C) | Normfarbwertanteile | | Helligkeit |
|---|---|---|---|---|---|---|---|---|
| | | | | | | x | y | Y |
| Beispiel 1 | Natrium 1) | 0,76 | 32 | 208 | 209 | 0,317 | 0,334 | 42,9 |
| " 2 | Natriumacetat 1) | 0,76 | 32 | 208 | 209 | 0,318 | 0,334 | 40,2 |
| " 3 | Natriumcarbonat 1) | 0,77 | 32 | 207,5 | 209 | 0,319 | 0,335 | 42,4 |
| Vergleichsbeispiel 1 | Natrium 2) | 0,79 | 32 | 207 | 209 | 0,323 | 0,338 | 43,6 |
| " 2 | Natriumacetat 2) | 0,77 | 32 | 207,5 | 209 | 0,324 | 0,339 | 42,7 |
| " 3 | Natriumacetat 3) | 0,70 | 32 | 208 | 207 | 0,324 | 0,337 | 43,2 |
| " 4 | Natriumcarbonat 3) | 0,71 | 32 | 209 | 208,5 | 0,325 | 0,338 | 41,9 |
| " 5 | Natriumstearat 3) | 0,58 | 32 | 212,5 | 207 | 0,343 | 0,339 | 33,9 |
| " 6 | Natriummontanat 3) | 0,62 | 32 | 211 | 207 | 0,330 | 0,344 | 38,8 |
| " 7 | ———— | 0,76 | – | 190 | 192 | 0,313 | 0,328 | 45,2 |

1) erfindungsgemäßes Verfahren

2) Einstufenverfahren

3) Nachträgliche Zugabe des Nukleierungsmittels

EP 0 215 364 B1

Tabelle 2:

| Beispiel/ Vergleichsbeispiel | Verfahren zur Nukleierung | $\eta_{red}$ (dl/g) | m Mol Na/ kg Polyester | $\tau_{1/2}$ (s) |
|---|---|---|---|---|
| Beispiel 4 | erfindungsgemäß | 0,71 | 32 | 15 |
| Vergleichsbeispiel 8 | einstufig | 0,71 | 32 | 16 |
| " 9 | ohne Nukleierung | 0,70 | -- | 54 |

**Patentansprüche**

1. Verfahren zur Herstellung von schnellkristallisierenden Polyestern nach dem Veresterungs-/Polykondensationsverfahren und/oder dem Umesterungs-/Polykondensationsverfahren, wobei zumindest ein Teil des Polyesters durch Polykondensation in Gegenwart von (Erd-)Alkalimetall oder einer (Erd-)Alkalimetallverbindung hergestellt wird, dadurch gekennzeichnet, daß

a) in einer ersten Stufe ein hochnukleierter Polyester mit einer reduzierten spezifischen Viskosität von mindestens 0,3 dl/g hergestellt wird unter Zugabe von $1 \times 10^{-1}$ mol bis 1 mol pro kg dieses Polyesters an (Erd-) Alkalimetall oder einer (Erd-)Alkalimetall-Verbindung zu einem beliebigen Zeitpunkt der Synthese und daß anschließend

8

EP 0 215 364 B1

b) in einer zweiten Stufe durch Zumischen dieses hochnukleierten Polyesters zu einem nichtnukleierten Polyester gleicher oder anderer chemischer Zusammensetzung mit einer reduzierten spezifischen Viskosität von mindestens 0,3 dl/g der schnellkristallisierende Polyester erhalten wird, wobei das Mischungsverhältnis des Polyesters nach a) zu dem Polyester nach b) Werte zwischen 1:1 und 1:100 aufweist.

2. Verfahren nach Anspruch 1, dadurch gekennzeichnet, daß zur Herstellung des hochnukleierten Polyesters gemäß Stufe a) das Umesterungs-/Polykonsensationsverfahren angewendet wird.

3. Verfahren nach Anspruch 1 und/oder 2, dadurch gekennzeichnet, daß der hochnukleierte Polyester Polybutylenterephthalat und/oder Polyethylenterephthalat ist.

4. Verfahren nach einem oder mehreren der Ansprüche 1 bis 3, dadurch gekennzeichnet, daß in der Verfahrensstufe a) bei der Synthese des hochnukleierten Polyesters $1 \times 10^{-1}$ mol bis $5\text{-}10^{-1}$ mol pro kg des Polyesters an (Erd-)Alkalimetall oder -verbindung zugegeben wird.

5. Verfahren nach einem oder mehreren der Ansprüche 1 bis 4, dadurch gekennzeichnet, daß der in der Stufe b) eingesetzte nichtnukleierte Polyester mindestens 80 Mol-% an Ethylenterephthalateinheiten oder Butylenterephthalateinheiten enthält.

6. Verfahren nach einem oder mehreren der Ansprüche 1 bis 6, dadurch gekennzeichnet, daß das Gewichtsverhältnis von hochnukleiertem Polyester zu nichtnukleiertem Polyester so liegt, daß die Menge an (Erd-)Alkali in dem schnellkristallisierenden Polyester $2 \times 10^{-3}$ bis 0,1 mol pro kg Polyester beträgt.

7. Verfahren nach einem oder mehreren der Ansprüche 1 bis 6, dadurch gekennzeichnet, daß der nichtnukleierte Polyester aus einer Mischung von Polyethylenterephthalat und/oder Polybutylenterephthalat mit anderen Polyestern und/oder anderen thermoplastisch verarbeitbaren Kunststoffen besteht.

8. Verfahren nach einem oder mehreren der Ansprüche 1 bis 7, dadurch gekennzeichnet, daß zusätzlich Verstärkungsmittel oder andere Zusatzstoffe in Mengen bis zu 300 Teilen pro 100 Teilen Polyester zugemischt werden.

9. Verfahren nach einem oder mehreren der Ansprüche 1 bis 8, dadurch gekennzeichnet, daß als Alkalimetall Natrium und als Alkalimetall-Verbindung Natriumcarbonat, Natriumhydrogencarbonat, Natriumhydroxid, Natriumsalze von Mono- oder Polycarbonsäuren oder Natriumalkoholate eingesetzt werden.

10. Verfahren nach einem oder mehreren der Ansprüche 1 bis 9, dadurch gekennzeichnet, daß die reduzierte Viskosität der Polyester nach a) und nach b), vorzugsweise mindestens 0,5, insbesondere mindestens 0,6 dl/g beträgt.

11. Verfahren nach einem oder mehreren der Ansprüche 1 bis 9, dadurch gekennzeichnet, daß die reduzierte Viskosität bei den Polyestern nach a) und nach b), bei denen Butylenglykol als Hauptkomponente vorliegt, mindestens 0,6, vorzugsweise mindestens 0,8 und insbesondere 0,9 dl/g beträgt.

12. Verfahren nach einem oder mehreren der Ansprüche 1 bis 11, dadurch gekennzeichnet, daß das Mischungsverhältnis der Polyester nach a) und nach b) zwischen 1:5 und 1:30 liegt.

**Claims**

1. A process for the preparation of rapidly crystallizing polyesters by the esterification/polycondensation method and/or the transesterification/polycondensation method, at least some of the polyester being prepared by polycondensation in the presence of an (alkaline earth) alkali metal or of an (alkaline earth) alkali metal compound, which comprises

a) in a first stage, preparing a highly nucleated polyester having a reduced specific viscosity of at least 0.3 dl/g with the addition of $1 \times 10^{-1}$ mole to 1 mole of an (alkaline earth) alkali metal or an (alkaline earth) alkali metal compound per kg of this polyester at any time during the synthesis, and

9

then,

b) in a second stage, obtaining the rapidly crystallizing polyester by mixing this highly nucleated polyester with a non-nucleated polyester having the same chemical composition or a different chemical composition and having a reduced specific viscosity of at least 0.3 dl/g, the mixing ratio of the polyester in a) to the polyester in b) having values between 1:1 and 1:100.

2. The process as claimed in claim 1, wherein the transesterification/polycondensation method is used for the preparation of the highly nucleated polyester in stage a).

3. The process as claimed in claim 1 and/or 2, wherein the highly nucleated polyester is polybutylene terephthalate and/or polyethylene terephthalate.

4. The process as claimed in one or more of claims 1 to 3, wherein $1 \times 10^{-1}$ mole to $5 \times 10^{-1}$ mole of an (alkaline earth) alkali metal or (alkaline earth) alkali metal compound per kg of the polyester is added during the synthesis of the highly nucleated polyester in process stage a).

5. The process as claimed in one or more of claims 1 to 4, wherein the non-nucleated polyester employed in stage b) contains at least 80 mol per cent of ethylene terephthalate units or butylene terephthalate units.

6. The process as claimed in one or more of claims 1 to 6, wherein the weight ratio of highly nucleated polyester to non-nucleated polyester is such that the amount of (alkaline earth) alkali metal in the rapidly crystallizing polyester is $2 \times 10^{-3}$ to 0.1 mole per kg of polyester.

7. The process as claimed in one or more of claims 1 to 6, wherein the non-nucleated polyester consists of a mixture of polyethylene terephthalate and/or polybutylene terephthalate with other polyesters and/or other plastics which can be processed by a thermoplastic method.

8. The process as claimed in one or more of claims 1 to 7, wherein reinforcing agents or other additives are additionally admixed in amounts up to 300 parts per 100 parts of polyester.

9. The process as claimed in one or more of claims 1 to 8, wherein the alkali metal used is sodium and the alkali metal compound used is sodium carbonate, sodium bicarbonate, sodium hydroxide, a sodium salt of a mono- or polycarboxylic acid or a sodium alcoholate.

10. The process as claimed in one or more of claims 1 to 9, wherein the reduced viscosity of the polyesters in a) and in b) is preferably at least 0.5, in particular 0.6, dl/g.

11. The process as claimed in one or more of claims 1 to 9, wherein the reduced viscosity of the polyesters in a) and in b), in which butylene glycol is the main component, is at least 0.6, preferably at least 0.8, in particular 0.9, dl/g.

12. The process as claimed in one or more of claims 1 to 11, wherein the mixing ratio of the polyesters in a) and in b) is between 1:5 and 1:30.

**Revendications**

1. Procédé de préparation de polyesters à cristallisation rapide selon le procédé d'estérification/polycondensation et/ou le procédé de transestérification/polycondensation, dans lequel au moins une partie du polyester est préparé par polycondensation en présence d'un métal alcalin ou alcalino-terreux ou d'un composé de métal alcalin ou alcalino-terreux, caractérisé en que

a) dans une première étape on prépare un polyester à haute teneur en agent de nucléation ayant une viscosité spécifique réduite d'au moins 0,3 dl/g en ajoutant $1 \times 10^{-1}$ mole à 1 mole par kg de ce polyester d'un métal alcalin ou alcalino-terreux ou d'un composé de métal alcalin ou alcalino-terreux à un moment quelconque de la synthèse, et en ce qu'ensuite

b) dans une seconde étape on obtient le polyester à cristallisation rapide en ajoutant ce polyester à haute teneur en agent de nucléation à un polyester sans agent de nucléation de composition chimique identique ou différente, ayant une viscosité spécifique réduite d'au moins 0,3 dl/g, le rapport de mélange du polyester selon a) au polyester selon b) ayant des valeurs comprises entre 1:1 et 1:100.

2. Procédé selon la revendication 1, caractérisé en ce que, pour la préparation du polyester à haute teneur en agent de nucléation selon l'étape a), on utilise le procédé de transestérification/polycondensation.

3. Procédé selon la revendication 1 et/ou 2, caractérisé en ce que le polyester à haute teneur en agent de nucléation est du poly(téréphtalate de butylène) et/ou du poly(téréphtalate d'éthylène).

4. Procédé selon l'une ou plusieurs des revendications 1 à 3, caractérisé en ce que, dans l'étape de procédé a), lors de la synthèse du polyester à haute teneur en agent de nucléation, on ajoute $1 \times 10^{-1}$ mole à $5 \times 10^{-1}$ mole de métal alcalin ou alcalino-terreux ou de composé de métal alcalin ou alcalino-terreux par kg de polyester.

5. Procédé selon l'une ou plusieurs des revendications 1 à 4, caractérisé en ce que le polyester sans agent de nucléation utilisé dans l'étape b) contient au moins 80 % en moles d'unités de téréphtalate d'éthylène ou d'unités de téréphtalate de butylène.

6. Procédé selon l'une ou plusieurs des revendications 1 à 5, caractérisé en ce que le rapport en masse du polyester à haute teneur en agent de nucléation au polyester sans agent de nucléation est tel que la quantité de métal alcalin ou alcalino-terreux dans le polyester à cristallisation rapide s'élève à $2 \times 10^{-3}$ à 0,1 mole par kg de polyester.

7. Procédé selon l'une ou plusieurs des revendications 1 à 6, caractérisé en ce que le polyester sans agent de nucléation est constitué par un mélange de poly(téréphtalate d'éthylène) et/ou de poly-(téréphtalate de butylène) avec d'autres polyesters et/ou d'autres matières plastiques façonnables de façon thermoplastique.

8. Procédé selon l'une ou plusieurs des revendications 1 à 7, caractérisé en ce qu'on ajoute en plus des agents renforçants ou d'autres additifs en des quantités allant jusqu'à 300 parties pour 100 parties de polyester.

9. Procédé selon l'une ou plusieurs des revendications 1 à 8, caractérisé en ce que, comme métal alcalin, on utilise du sodium, et, comme composé de métal alcalin, du carbonate de sodium, de l'hydrogénocarbonate de sodium, de l'hydroxyde de sodium, des sels de sodium d'acides mono- ou polycarboxyliques ou des alcoolates de sodium.

10. Procédé selon l'une ou plusieurs des revendications 1 à 9, caractérisé en ce que la viscosité réduite des polyesters selon a) et selon b) est de préférence d'au moins 0,5, en particulier d'au moins 0,6 dl/g.

11. Procédé selon l'une ou plusieurs des revendications 1 à 9, caractérisé en ce que, dans le cas des polyesters selon a) et selon b) dans lesquels le butylèneglycol est présent en tant que constituant principal, la viscosité réduite est d'au moins 0,6, de préférence d'au moins 0,8 et en particulier de 0,9 dl/g.

12. Procédé selon l'une ou plusieurs des revendications 1 à 11, caractérisé en ce que le rapport de mélange des polyesters selon a) et selon b) se situe entre 1:5 et 1:30.